# EUROPEAN PATENT SPECIFICATION

(11) **EP 0 970 347 B1**
(45) Date of publication and mention of the grant of the patent: **03.01.2001**
(21) Application number: 98905616.3
(22) Date of filing: 18.02.1998
(51) Int. Cl.: G01B 3/10

(54) **WITHDRAWABLE GRADUATED TAPE MEASURING INSTRUMENT INCLUDING A SAFETY DEVICE**
BANDMASS MIT SICHERHEITSEINRICHTUNG
INSTRUMENT DE MESURE A BANDE GRADUEE RETRACTABLE COMPORTANT UN DISPOSITIF DE SECURITE

(30) Priority: 27.02.1997 IT MI970142 U
(43) Date of publication of application: 12.01.2000
(73) Proprietor: METRICA S.p.A., 36071 Arzignano (IT)
(72) Inventor: DORIGUZZI BOZZO, Mario, I-36071 Arzignano (IT)
(74) Representative: Cicogna, Franco
(86) International application number: IT9800030
(87) International publication number: WO9838471

(56) References cited:
- DE-A- 3 126 066
- FR-A- 1 246 890
- FR-A- 1 389 918
- FR-A- 2 405 461
- GB-A- 2 138 281
- US-A- 4 226 105
- US-A- 4 760 715

## Description

### BACKGROUND OF THE INVENTION

The present invention relates to a withdrawable graduated tape measuring instrument including a safety device.

As is known, withdrawable graduated tape measures are very simple and generally used measurement or measuring instruments.

These measuring instruments provide a lot of recognized advantages, deriving from their small size and facility of use, together with a very accurately made construction, and they are, accordingly, produced in very large amounts and sold at a very low cost.

Mainly due to the above mentioned advantages, the withdrawable graduated tape measures, owing to the combination of their use facility and their high use reliability, represent indispensable measuring means or instruments for the building construction, industrial production and marketing fields.

The technological development of the above mentioned measuring graduated tapes has involved, on one hand, the possibility of making measurements of increasingly larger lengths (for example up to 10 m for the flexible graduated tape measures providing for an automatic recovering of the flexible graduated tape, an up to 100 m for the metrical graduated tape rolls, in which the tape is recovered or withdrawn into its housing by a manual crank) and, on the other hand, it has further involved an improved mechanical performance such as, for example, a stiffness up to 3 m of the flexible tape, which has been obtained by increasing the width of the tape - (for example up to 25 mm) - as suitably bent or curved.

The above mentioned improvements have induced the measure tape makers to make heavier tapes, having a weight of the order of some hundreds of grams, these graduated heavy tapes being held in comparatively small size casings.

Considering that the use of a measure graduated tape is, per se, of a discontinuous type, since it is conventionally alternatively used in cooperation with other tools of marking instruments to properly make the made measurements, prior graduated tape measures can accidentally fall or be lost.

Accidental fallings represent a great danger for other operators operating nearby, and, moreover, further represent an economic damage.

In this connection it would be sufficient to mention the situation of a building construction place or of an apparatus assembling place having a comparatively great height, to only understand that an accidental fall of a measure tape, having a comparatively high weight, on the head of a underlying person, would constitute a very dangerous safety and health risk, penally sanctioned by severe law provisions and rules.

### SUMMARY OF THE INVENTION

Accordingly, the aim of the present invention is to solve the above mentioned problems, by providing a withdrawable graduated tape measuring instrument including a safety device preventing the instrument from accidentally falling.

Within the scope of the above mentioned aim, a main object of the present invention is to provide such a measuring instrument including a safety device which does not hinder normal working operations by an operator.

Another object of the present invention is to provide such a measuring instrument which can not be lost and which, moreover, is safely protected against any possible damages.

Yet another object of the present invention is to provide such a measuring instruments which, notwithstanding its improved constructional and operating features, is very simple construction wise and can be made easily and at a very low cost, thereby allowing the instrument to achieve a broad diffusion in the professional user field.

According to the present invention, the above mentioned aim and objects, as well as yet other objects, which will become more apparent hereinafter, are achieved by a withdrawable graduated tape measuring instrument including a safety device, said measuring instrument comprising an instrument casing in which a withdrawable graduated tape is arranged, characterized in that said measuring instrument comprises moreover a resilient variable operating length element having one end thereof connected to a set point of said instrument casing and having the other end thereof adapted to be coupled to a garment of the operator using said measuring instrument.

### BRIEF DESCRIPTION OF THE DRAWINGS

Further characteristics and advantages of the present invention will become more apparent hereinafter from the following detailed disclosure of a withdrawable graduated tape measuring instrument, including a safety device, according to the present invention, which is illustrated by way of an indicative, but not limitative, example, in the figures of the accompanying drawings, where:
Figure 1 is a schematic view illustrating a possible preferred embodiment of the withdrawable graduated tape measuring instrument according to the present invention;
Figure 2 illustrates a different embodiment of the latching elements including a snap openable hook element of the measuring instrument according to the present invention;
Figure 3 illustrates a latching element comprising a rotary spring-catch element;
Figure 4 illustrates latching elements comprising a coil or spiral ring element;
Figure 5 illustrates latching elements comprising an openable ring element;
Figure 6 illustrates a measuring instrument having a variable operating length element, of a spiral or coil type;
Figure 7 illustrates a garment latching element, comprising a clip or clamping element;
   and
Figure 8 illustrates a measuring instrument having a variable operating length element coupled to the body of the instrument casing by a ring-like eyelet terminal element, and being locked by a screw or a rivet.

### DESCRIPTION OF THE PREFERRED EMBODIMENTS

With reference to the number references of the above mentioned figures, the withdrawable graduated tape measuring instrument, including a safety device, according to the present invention, which has been generally indicated by the reference number 1, comprises an instrument casing 2, having any desired configurations, inside which is provided a withdrawable graduated tape, comprising, for example, a flexible measure or other tape or strip elements.

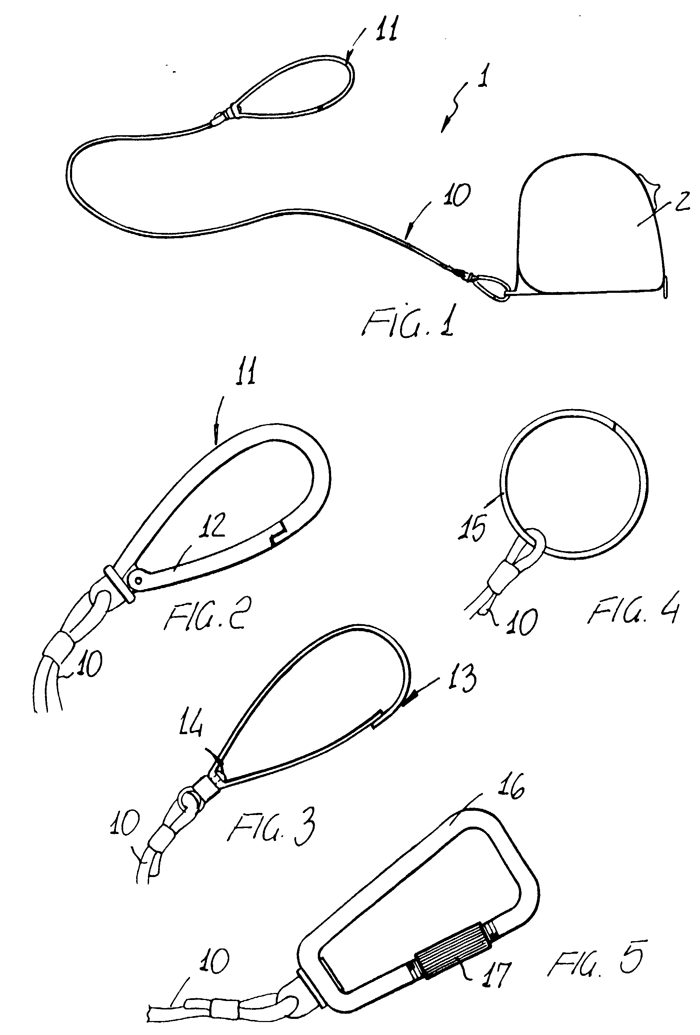

The main feature of the invention is that a variable operating length resilient element comprising, as shown in Figures 1 to 5, a resilient element 10, made either of a synthetic or natural material, such as a plastic material, or being also made of a steel material and having a spring like configuration is moreover provided.

Said variable operating length element is arranged between the withdrawable tape measuring instrument and a garment of the operator and is connected, by any suitable clamping means, on one side to the casing 2 and, on the other side, to said garment of the operator, for example to the belt of the operator trousers or any other desired part of said garment.

Said resilient element has been specifically designed to restrain or hold the measuring instrument during an accidental fall thereof and it has such a length allowing an arm of the operator to be easily extended as the measurement is carried out and, with the instrument in a rest condition, for example stoled in a pocket of the operator garment, or coupled to his belt, said length should be sufficiently short in order not to hinder the working movements of the operator.

Moreover, in the case of an accidental falling, then the resilient element will cause said instrument to be resiliently recovered, thereby preventing it from accidentally damaging other persons who would be impacted by a comparatively large mass, thereby said measuring instrument can not be lost or damaged.

In this connection it should be apparent that the latching element can have any desired configurations.

For example, in Figure 1 a latching element comprising a hook element which can be snap opened, said hook element including a spring-catch member 11 coupled to the resilient element 10 and having an openable tongue 12 which can be resiliently depressed, is shown.

If desired, and as is shown in Figure 3, the latching element can also comprise a spring-catch member 13 including a pivot pin 14 in order to allow it to turn to fit the movements of the operator.

The latching element can also comprise a ring element 15, shown in Figure 4, having a spiral or coil configuration, and made of any suitable plastic materials or metal materials, which can be fixedly joined to a set coupling point or region.

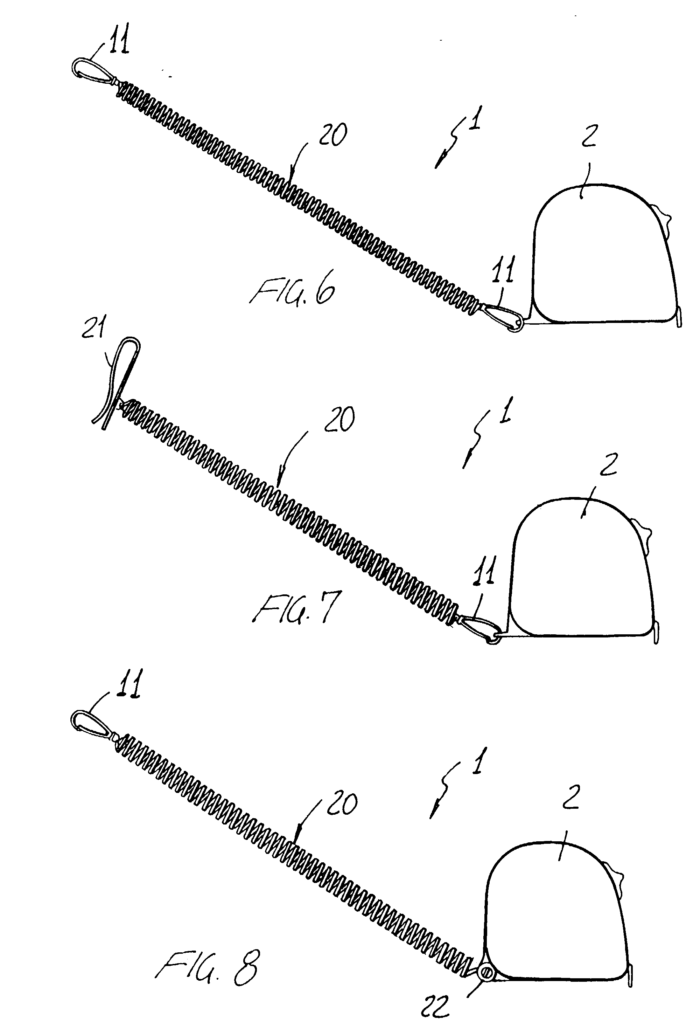

Figure 5 shows a latching element comprising a ring element 16, coupled to a threaded sleeve 17 provided for opening said ring element.

As shown in Figures 6 to 8, the variable operating length element can also comprise a spiral or coil wire 20, combining the advantages of a comparatively small rest length and a very high extension property, without hindering the operating movements of the operator.

As shown in Figure 7, the garment coupling or connecting element can comprise a clip or clamp element 21, which can be easily clamped to the operator belt, to a pocket of the operator garment or any other portions of said garment.

As shown in Figure 8, the instrument casing coupling element comprises an eyelet terminal type of element 22 which has a ring-like configuration and is provided for connection to the instrument casing 2 by a screw, rivet or the like.

The measuring instrument latching element can also be simply made by forming a knot on the variable operating length element, the size of said knot being adapted to prevent it from passing through a hole formed through the instrument casing.

It would be also possible to weld the end portion of the variable length element after having caused it to pass through a hole formed through the instrument casing, whereas the latching to the garment can be obtained by one of the above disclosed latching elements.

It is furthermore possible to lock, by a clip or a metal sheath adapted to be closed by clamping, the end portion of the variable operating length element after having caused it to pass through a hole formed through the instrument casing.

It is moreover possible to lock by a adhesive material the end portion of the variable operating length element to the instrument casing.

From the above disclosure it should be apparent that the invention fully achieves the intended aim and objects.

In particular, it should be apparent that the above disclosed embodiments of the latching elements have been all designed in order to permanently or removably connect the measuring instrument to the operator, without hindering the working operations thereof, while preventing the measuring instrument from being accidentally lost.

In practicing the invention, the used materials, provided that they are compatible to the intended application, as well as the contingent size and shapes, can be any depending on requirements.

## Claims

1. A withdrawable graduated tape measuring instrument (1) including a safety device, said measuring instrument comprising an instrument casing (2) in which a withdrawable graduated tape is arranged, characterized in that said measuring instrument (1) comprises moreover a resilient variable operating length element (10) having one end thereof connected to a set point of said instrument casing (2) and having the other end thereof adapted to be coupled to a garment of the operator using said measuring instrument.

2. A withdrawable graduated tape measuring instrument including a safety device, according to Claim 1, further comprising an instrument casing latching or clamping element for said resilient variable operating length, element (10).

3. A withdrawable graduated tape measuring instrument including a safety device, according to Claim 1, characterized in that said resilient variable operating length element (10) comprises a resilient spiral or coil wire.

4. A withdrawable graduated tape measuring instrument including a safety device, according to Claim 1, characterized in that said measuring instrument (1) comprises moreover, at at least one end of said resilient variable operating length element (10), a latching element.

5. A withdrawable graduated tape measuring instrument including a safety device, according to Claim 4, characterized in that said latching element comprises a snap openable hook element.

6. A withdrawable graduated tape measuring instrument including a safety device, according to Claim 4, characterized in that said latching element comprises a ring-like element (16) which can be opened by a threaded sleeve element (17).

7. A withdrawable graduated tape measuring instrument including a safety device, according to Claim 4, characterized in that said latching element comprises a spiral ring element (20).

8. A withdrawable graduated tape measuring instrument including a safety device, according to Claim 4, characterized in that said latching element comprises a clip element (24).

9. A withdrawable graduated tape measuring instrument including a safety device, according to Claim 2, characterized in that the instrument casing latching or clamping element comprises a wire or yarn (22) knotted on itself after having caused it to pass through a ring element or the like latching point for latching to said instrument casing (2).

10. A withdrawable graduated tape measuring instrument including a safety device, according to Claim 2, characterized in that said instrument casing latching or clamping element comprises a wire welded on itself after having caused it to pass through a hole formed through said instrument casing (2).

11. A withdrawable graduated tape measuring instrument including a safety device, according to Claim 2, characterized in that said instrument casing latching or clamping element comprises a wire or yarn locked by a screw or rivet or the like or by an adhesive material to said instrument casing (2).

12. A withdrawab.le graduated tape measuring instrument including a safety device, according to Claim 2, characterized in that the instrument casing latching or clamping element comprises an eyelet element having a ring-like configuration coupled to said instrument casing (2) by a screw, rivet or the like.

13. A withdrawable graduated tape measuring instrument including a safety device, according to Claim 2, characterized in that said latching or clamping element is rotatably coupled to said variable operating length element (10).

14. A withdrawable graduated tape measuring instrument including a safety device, according to Claim 1, characterized in that said variable operating length element (10) has a small length in a rest condition thereof and being sufficiently soft as it is extended by the operator during a measuring operation.

## Patentansprüche

1. Zurückziehbares Bandmaß (1) mit Einteilung und einer Sicherheitseinrichtung, wobei das Meßinstrument ein Instrumentengehäuse (2) aufweist, in dem ein zurückziehbares Bandmaß mit Einteilung angeordnet ist,
**dadurch gekennzeichnet**, daß
das Meßinstrument (1) weiterhin ein federndes Element (10) mit variabler Betriebslänge aufweist, dessen eines Ende an einem vorbestimmten Punkt des Instrumentengehäuses (2) befestigt und dessen anderes Ende so angepaßt ist, daß es an ein Kleidungsstück des Bedieners koppelbar ist, der das Meßinstrument benutzt.

2. Zurückziehbares Bandmaß mit Einteilung und einer Sicherheitseinrichtung nach Anspruch 1,
**dadurch gekennzeichnet**, daß
es weiterhin ein das Instrumentengehäuse einhängendes oder klemmendes Element für das federnde Element variabler Betriebslänge (10) aufweist.

3. Zurückziehbares Bandmaß mit Einteilung und einer Sicherheitseinrichtung nach Anspruch 1,
**dadurch gekennzeichnet**, daß
das federnde Element variabler Betriebslänge (10) eine federnde Spirale oder Spulendraht aufweist.

4. Zurückziehbares Bandmaß mit Einteilung und einer Sicherheitseinrichtung nach Anspruch 1,
**dadurch gekennzeichnet**, daß
das Meßinstrument (1) darüber hinaus an mindestens einem Ende des federnden Elementes variabler Betriebslänge (10) ein Einhängeelement aufweist.

5. Zurückziehbares Bandmaß mit Einteilung und einer Sicherheitseinrichtung nach Anspruch 4,
**dadurch gekennzeichnet**, daß
das Einhängeelement einen Karabinerhaken aufweist.

6. Zurückziehbares Bandmaß mit Einteilung und einer Sicherheitseinrichtung nach Anspruch 4,
**dadurch gekennzeichnet**, daß
das Einhängeelement ein ringähnliches Element (16) aufweist, das mit Hilfe eines Gewindehülsenelementes (17) geöffnet werden kann.

7. Zurückziehbares Bandmaß mit Einteilung und einer Sicherheitseinrichtung nach Anspruch 4,
**dadurch gekennzeichnet**, daß
das Einhängeelement ein spiralförmiges Ringelement (20) aufweist.

8. Zurückziehbares Bandmaß mit Einteilung und einer Sicherheitseinrichtung nach Anspruch 4,
**dadurch gekennzeichnet**, daß
das Einhängeelement ein Clip-Befestigungselement (24) aufweist.

9. Zurückziehbares Bandmaß mit Einteilung und einer Sicherheitseinrichtung nach Anspruch 2,
**dadurch gekennzeichnet**, daß
das Einhänge- oder Klemmelement des Instrumentengehäuses einen Draht oder Garn (22) aufweist, der mit sich selbst verknotet wird, nachdem er durch einen ringförmigen oder ringähnlichen Einhängepunkt hindurchgeführt wurde, um das Instrumentengehäuse (2) einzuhängen.

10. Zurückziehbares Bandmaß mit Einteilung und einer Sicherheitseinrichtung nach Anspruch 2,
**dadurch gekennzeichnet**, daß
das Einhänge- oder Klemmelement für das Instrumentengehäuse einen Draht aufweist, der auf sich selbst geschweißt wurde, nachdem er durch ein in dem Instrumentengehäuse (2) ausgebildetes Loch hindurchgeführt wurde.

11. Zurückziehbares Bandmaß mit Einteilung und einer Sicherheitseinrichtung nach Anspruch 2,
**dadurch gekennzeichnet**, daß
das Einhänge- oder Klemmelement für das Instrumentengehäuse einen Draht oder Garn aufweist, der mittels einer Schraube oder Niete oder Ähnlichem, bzw. Klebstoff an dem Instrumentengehäuse befestigt (2) ist.

12. Zurückziehbares Bandmaß mit Einteilung und einer Sicherheitseinrichtung nach Anspruch 2,
**dadurch gekennzeichnet**, daß
das Einhänge- oder Klemmelement für das Instrumentengehäuse eine Öse mit einer ringähnlichen Konfiguration aufweist, die mittels einer Schraube, Niete oder Ähnlichem an das Instrumentengehäuse (2) gekoppelt ist.

13. Zurückziehbares Bandmaß mit Einteilung und einer Sicherheitseinrichtung nach Anspruch 2,
**dadurch gekennzeichnet**, daß
das Einhänge- oder Klemmelement drehbar an das Element mit variabler Betriebslänge (10) gekoppelt ist.

14. Zurückziehbares Bandmaß mit Einteilung und einer Sicherheitseinrichtung nach Anspruch 1,
**dadurch gekennzeichnet**, daß
das Element mit variabler Betriebslänge (10) in seiner Ruhestellung eine kurze Länge aufweist und ausreichend weich ist, wenn es während eines Meßvorgangs vom Bediener herausgezogen wird.

## Revendications

1. Instrument de mesure à ruban gradué rétractable (1) comprenant un dispositif de sécurité, ledit instrument de mesure comprenant un boîtier (2) dans lequel un ruban gradué rétractable est disposé, caractérisé en ce que ledit instrument de mesure (1) comprend de plus un élément élastique dont la longueur de fonctionnement est variable (10), ayant l'une de ses extrémités reliée à un point de référence dudit boîtier de l'instrument (2) et ayant l'autre de ses extrémités adaptée pour être couplée à un vêtement de l'opérateur utilisant ledit instrument de mesure.

2. Instrument de mesure à ruban gradué rétractable comprenant un dispositif de sécurité, selon la revendication 1, comprenant en outre un élément de verrouillage ou de serrage au boîtier de l'instrument pour ledit élément élastique dont la longueur de fonctionnement est variable (10).

3. Instrument de mesure à ruban gradué rétractable comprenant un dispositif de sécurité, selon la revendication 1, caractérisé en ce que ledit élément élastique dont la longueur de fonctionnement est variable (10) comprend un fil métallique élastique en spirale ou en hélice.

4. Instrument de mesure à ruban gradué rétractable comprenant un dispositif de sécurité, selon la revendication 1, caractérisé en ce que ledit instrument de mesure (1) comprend de plus, à au moins une extrémité dudit élément élastique dont la longueur de fonctionnement est variable (10), un élément de verrouillage.

5. Instrument de mesure à ruban gradué rétractable comprenant un dispositif de sécurité, selon la revendication 4, caractérisé en ce que ledit élément de verrouillage comprend un élément de type crochet ouvrable par un mousqueton.

6. Instrument de mesure à ruban gradué rétractable comprenant un dispositif de sécurité, selon la revendication 4, caractérisé en ce que ledit élément de verrouillage comprend un élément de type annulaire (16) qui peut être ouvert par un élément de type manchon fileté (17).

7. Instrument de mesure à ruban gradué rétractable comprenant un dispositif de sécurité, selon la revendication 4, caractérisé en ce que ledit élément de verrouillage comprend un élément annulaire en spirale (20).

8. Instrument de mesure à ruban gradué rétractable comprenant un dispositif de sécurité, selon la revendication 4, caractérisé en ce que ledit élément de verrouillage comprend un élément de type pince (24).

9. Instrument de mesure à ruban gradué rétractable comprenant un dispositif de sécurité, selon la revendication 2, caractérisé en ce que l'élément de verrouillage ou de serrage du boîtier de l'instrument comprend un fil métallique ou un fil (22) noué sur lui-même après avoir été passé à travers un élément annulaire ou point de verrouillage analogue pour son verrouillage audit boîtier de l'instrument (2).

10. Instrument de mesure à ruban gradué rétractable comprenant un dispositif de sécurité, selon la revendication 2, caractérisé eh ce que ledit élément de verrouillage ou de serrage du boîtier de l'instrument comprend un fil métallique soudé sur lui-même après avoir été passé à travers un trou formé au travers dudit boîtier de l'instrument (2).

11. Instrument de mesure à ruban gradué rétractable comprenant un dispositif de sécurité, selon la revendication 2, caractérisé en ce que ledit élément de verrouillage ou de serrage du boîtier de l'instrument comprend un fil métallique ou un fil fixé par une vis ou un rivet ou analogue ou par un matériau adhésif audit boîtier de l'instrument (2).

12. Instrument de mesure à ruban gradué rétractable comprenant un dispositif de sécurité, selon la revendication 2, caractérisé en ce que l'élément de verrouillage ou de serrage du boîtier de l'instrument comprend un élément de type oeillet ayant une configuration de type annulaire couplé audit boîtier de l'instrument (2) par une vis, un rivet ou analogue.

13. Instrument de mesure à ruban gradué rétractable comprenant un dispositif de sécurité, selon la revendication 2, caractérisé en ce que ledit élément de verrouillage ou de serrage est couplé de façon rotative audit élément dont la longueur de fonctionnement est variable (10).

14. Instrument de mesure à ruban gradué rétractable comprenant un dispositif de sécurité, selon la revendication 1, caractérisé en ce que ledit élément dont la longueur de fonctionnement est variable (10) présente une faible longueur en position de repos, tout en étant suffisamment souple lorsqu'il est étiré par l'opérateur lors d'une opération de mesure.
